# EUROPÄISCHE PATENTSCHRIFT

(11) **EP 3 510 297 B1**
(45) Veröffentlichungstag und Bekanntmachung des Hinweises auf die Patenterteilung: **22.04.2020**
(21) Anmeldenummer: 17768407.3
(22) Anmeldetag: 08.09.2017
(51) Int. Cl.: F16D 51/16, F16D 55/22

(54) **VERSCHLEISSSENSIERUNG**
WEAR SENSING
DÉTECTION D'USURE

(30) Priorität: 09.09.2016 DE 102016116998
(43) Veröffentlichungstag der Anmeldung: 17.07.2019
(73) Patentinhaber: SAF-HOLLAND GmbH, 63856 Bessenbach (DE)
(72) Erfinder: HARTMANN, Mark, 65843 Sulzbach (DE); BRUNSCH, Bernd, 63303 Dreieich (DE)
(74) Vertreter: Müller Schupfner & Partner Patent- und Rechtsanwaltspartnerschaft mbB
(86) Internationale Anmeldenummer: PCT/EP2017/072559
(87) Internationale Veröffentlichungsnummer: WO 2018/046647

(56) Entgegenhaltungen:
- WO-A1-2006/112784
- WO-A1-2015/032468
- DE-A1-102006 044 072
- DE-A1-102012 002 733
- JP-A- 2002 250 383
- JP-A- 2009 299 714
- US-A1- 2002 116 992

## Beschreibung

Die vorliegende Erfindung betrifft eine Verschleißsensierung, insbesondere um den Bremsenverschleiß an einem Kraftfahrzeug feststellen und anzeigen zu können.

Aus dem Stand der Technik sind bereits Möglichkeiten bekannt, den Verschleißzustand der Bremsbacken oder Belagelemente sowie der Bremsscheibe oder Bremstrommel mit elektronischen Sensoren zu überwachen und Warnmeldungen auszugeben, wenn der Bremsenverschleiß einen bestimmten Betrag überschritten hat. Darüber hinaus sind aus dem Stand der Technik auch mechanisch arbeitende Verschleißindikatoren bekannt, welche dem Benutzer eines Kraftfahrzeuges optisch oder haptisch einen Hinweis auf den Verschleißzustand des Bremssystems des Kraftfahrzeuges geben. Nachteil der aus dem Stand der Technik bekannten elektrisch betriebenen Verschleißanzeigesysteme ist, dass stets eine Verkabelung und ein Anschluss der Verschleißsensoren an eine Spannungsquelle und eine Überwachungseinheit nötig sind. Hierfür müssen im teilweise temperaturkritischen Bereich der Bremse Kabel verlegt werden, wobei die Fehleranfälligkeit und Empfindlichkeit dieser im Bremsbereich verlegten Kabel mitunter sehr hoch ist. Infolgedessen ist die Verlässlichkeit der aus dem Stand der Technik bekannten Verschleißanzeigevorrichtungen nicht hoch genug, um den Anforderungen an die Sicherheit gerecht zu werden und gleichzeitig die wirtschaftliche Ausnutzung der Bremsbeläge zu ermöglichen. Die mechanischen Verschleißsensoren sind oft nicht genau genug und benötigen zudem teilweise große konstruktive Eingriffe in das Bremssystem des Kraftfahrzeuges.

Die WO 2006/112784 A1, die WO 2015/032468 A1 und die DE 10 2012 002 733 A1 offenbaren ein Bremssystem, insbesondere zum Einsatz in Kraftfahrzeugen, umfassend einen Transponder (4), wobei der Transponder (4) dafür ausgelegt und im Bremssystem positioniert und/oder festgelegt ist, dass er bei Erreichen eines vorbestimmbaren Verschleißzustandes des Bremssystems außer Funktion gesetzt wird.

Aufgabe der vorliegenden Erfindung ist es, eine verbesserte Möglichkeit zur Feststellung des Verschleißzustandes eines Bremssystems eines Kraftfahrzeuges bereit zu stellen, wobei insbesondere der Eingriff in die Konstruktion des Bremssystems möglichst gering gehalten werden soll.

Diese Aufgabe wird gelöst mit einem Bremssystem gemäß Anspruch 1 sowie einer Verschleißüberwachung gemäß Anspruch 5.

Erfindungsgemäß umfasst das Bremssystem einen Transponder, wobei der Transponder dafür ausgelegt und im Bremssystem positioniert und/oder festgelegt ist, dass er bei Erreichen eines vorausgewählten oder vordefinierten Verschleißzustandes des Bremssystems von einer Eingriffsgeometrie des Bremssystems außer Funktion gesetzt wird. Der Transponder ist ein elektrischer Schaltkreis, welcher mit einer Antenne zum analogen Empfangen und Senden eines elektrischen Signals, insbesondere elektromagnetischer Wellen, ausgelegt ist. Erfindungsgemäß ist der Transponder in einem Bremssystem derart angeordnet und festgelegt, dass wenn das Bremssystem einen bestimmten Verschleißzustand erreicht, der Transponder von einer Eingriffsgeometrie des Bremssystems außer Funktion gesetzt wird. Das Außer-Funktion-Setzen des Transponders kann dabei in einer Ausführungsform durch Zerstörung des Transponders erfolgen. Alternativ hierzu kann die Eingriffsgeometrie den Transponder auch derart überdecken oder abschirmen, dass ein Signal vom Transponder zu einem außerhalb des Bremssystems angeordneten Lesegerätes nicht mehr vordringen kann. Mit anderen Worten, ist der Zustand in dem der Transponder außer Funktion gesetzt ist, der Zustand in welchem kein Signal vom Transponder zu einem außerhalb des Bremssystems befindlichen Lesegerät gelangt. Dieser Zustand ist ein Hinweis für den Anwender des Bremssystems, dass der Verschleiß im Bremssystem derart fortgeschritten ist, dass eine Wartung des Bremssystems vorgenommen werden muss.

Bevorzugt ist der Transponder als RFID-Chip (engl. radio-frequency identification) ausgebildet. RFID-Chips sind auf dem Markt sehr kostengünstig erhältlich. Dabei kann der Transponder, welcher als RFID-Chip ausgebildet ist, insbesondere an die Anforderungen der jeweiligen Einbauposition im Bremssystem perfekt angepasst werden. So kann der Transponder insbesondere in einer Schutzhülle aufgenommen oder durch diese geschützt sein, mit denen der Transponder jeweils sowohl gegen hohe Temperaturen (bis zu 300°C), als auch gegen mechanischen Einfluss von Fremdkörpern im Bereich des Bremssystems geschützt wird. Insbesondere bevorzugt kann der Transponder oder seine Schutzhülle dabei zusätzlich mit einer Außengeometrie versehen sein, welche einen zumindest teilweisen formschlüssigen Eingriff des Transponders mit seiner jeweiligen Eingriffsgeometrie am Bremssystem erlaubt.

Weiterhin bevorzugt ist der Transponder vorzugsweise als passiver RFID-Chip ausgelegt. Der Vorteil eines passiven RFID-Chips besteht darin, dass dieser keine eigene Energieversorgung wie beispielsweise eine Batterie oder elektrische Anschlüsse benötigt, um ein Signal an ein Lesegerät zu senden. Vielmehr speist sich der als passiver RFID-Chip ausgelegte Transponder aus den vom Lesegerät ausgesandten Funkwellen, welche den Transponder, insbesondere einen Schwingkreis des Transponders, anregen und ein bestimmtes Antwortsignal im Transponder erzeugen. Dieses Antwortsignal wird über die Antenne des Transponders in Richtung des Lesegerätes zurückgesandt und dort erkannt und zugeordnet. Besonders vorteilhaft kann durch die Ausbildung als passiver RFID-Chip der Transponder sehr klein und vollkommen autark, d. h. ohne eigene Energieversorgung, am Bremssystem angeordnet werden. Mit Vorteile sind hierfür keine Änderungen der Geometrie des Bremssystems erforderlich. Auch die Gewichtszunahme durch die Anordnung eines Transponders im Bremssystem ist vernachlässigbar, da als passive RFID-Chips ausgelegte Transponder eine Masse im einstelligen Grammbereich im Wesentlichen nicht überschreiten.

Mit Vorteil ist der Transponder stoffschlüssig am Bremssystem festgelegt. Insbesondere kann zur Festlegung des Transponders eine Klebeverbindung oder eine Lötverbindung zum Einsatz kommen. Klebverbindungen haben den Vorteil, dass sie auf einfache Weise zwischen unterschiedlichen, auch nichtmetallischen Materialien hergestellt werden können. Besonders bevorzugt kann der Transponder über eine Klebverbindung an außen liegenden Geometrien des Bremssystems festgelegt werden, welche durch die Eingriffsgeometrie des Bremssystems besonders zuverlässig erreicht werden. Auf diese Weise kann ein zuverlässiges Außer-Funktion-Setzen des Transponders bei Erreichen des vorausgewählten Verschleißzustandes des Bremssystems gewährleistet werden. Sofern ein sicheres Ablösen und Entfernen des Transponders aus dem Bremssystem gewährleistet werden kann, reicht zum Außer-Funktion-Setzen des Transponders, dass dieser durch die Eingriffsgeometrie vom Bremssystem abgelöst wird, unabhängig davon, ob er dabei auch zerstört wird oder nicht. Auch hierbei stellt Anwender mit einem auf das Bremssystem gerichteten Lesegerät fest, dass der Belagverschleiß einen Grenzwert erreicht hat. Mit Vorteil bleiben bei dieser Variante des Bremssystems keine Rückstände des Transponders am Bremssystem über.

In einer nicht erfindungsgemäßen Ausführungsform ist der Transponder an einem der bewegten Teile des Bremssystems festgelegt, wobei bei einer Relativbewegung des bewegten Teils relativ zu einem feststehenden Teil des Bremssystems eine Eingriffsgeometrie des feststehenden Teils den Transponder durch mechanische Einwirkung zerstört oder nach außen hin gegen elektromagnetische Wellen abschirmt. Mit Vorteil kann bei einer Klebverbindung des Transponders am Bremssystem das Außer-Funktion-Setzen des Transponders auch darin bestehen, dass dieser von seiner Befestigungsgeometrie am Bremssystem abgeschabt und abgelöst wird. Als bewegter Teil des Bremssystems wird insbesondere bevorzugt eine Bremsbacke oder ein Betätigungskolben der Bremse angesehen. Weiterhin bevorzugt sind der Belagträger, ein S-Nocken oder ein Spreizkeil des Bremssystems als bewegte Teile eines Bremssystems definiert. Mit anderen Worten sind insbesondere die Teile des Bremssystems, welche sich relativ zum Bremsträger, der wiederum am Fahrwerk des Kraftfahrzeuges festgelegt ist, bewegen, als bewegte Teile anzusehen. Insofern ist auch ein Bremssattel, welcher wiederum zwei sich relativ zum Bremssattel bewegende Belagelemente aufweist, als bewegtes Teil im Sinne der vorliegenden Erfindung anzusehen. Der Vorteil bei der Anordnung des Transponders auf einem bewegten Teil des Bremssystems liegt darin, dass insbesondere im Fall von Scheibenbremsen oder Trommelbremsen der Betätigungsweg des jeweiligen Bremsbelagelements und der dazugehörigen Bauteile unmittelbar in Zusammenhang mit dem bereits am Belagelement stattgefundenen Verschleiß steht. Insofern ist die Größe, bzw. die Wegstrecke des Betätigungsweges ein unmittelbarer Indikator für den Verschleiß des Bremssystems. Dieser Zusammenhang kann ausgenutzt werden, indem der Transponder an dem bewegten Teil, welches insbesondere mit der Bremsbacke, dem Bremsbelag oder dem Belagträger verbunden ist, festgelegt ist, und so bei Erreichen einer bestimmten Wegstrecke durch eine am feststehenden Teil des Bremssystems, wie dem Bremsträger oder einem Gehäuse des Bremssystems, vorgesehene Eingriffsgeometrie abgedeckt und abgeschirmt oder zerstört wird. Hierdurch lässt sich besonders einfach der vorgesehene Grenzverschleiß als Funktion einer bestimmten Befestigungsposition des Transponders am bewegten Teil des Bremssystems bestimmen und mit entsprechend hoher Genauigkeit einstellen.

In einer nicht erfindungsgemäßen Ausführungsform ist der Transponder an einem ersten bewegten Teil des Bremssystems festgelegt, wobei bei einer Relativbewegung des ersten bewegten Teils relativ zu einem zweiten bewegten Teil des Bremssystems das zweite bewegte Teil den Transponder durch mechanische Einwirkung zerstört oder gegenüber elektromagnetischer Strahlung abschirmt. Alternativ zu der Festlegung des Transponders am feststehenden Teil des Bremssystems kann der Transponder auch an einem ersten bewegten Teil des Bremssystems festgelegt werden, welches in Relativbewegung zu einem zweiten bewegten Teil steht. Der hierbei erzielte Effekt, nämlich dass bei Erreichen eines bestimmten relativen Bewegungszustandes zwischen den beiden bewegten Teilen eine Zerstörung oder Abschirmung des Transponders zu dessen Funktionsunfähigkeit führt, ist ähnlich zu den zuvor beschriebenen Auslegungsvarianten. Insbesondere kann der Transponder dabei an einem Betätigungselement festgelegt sein, welches sich beispielsweise relativ zu einem Schwimmsattel des Bremssystems bewegt. Der Schwimmsattel ist dabei bezogen auf den Bremsträger des Bremssystems ebenfalls als bewegtes Teil anzusehen. Dabei kann insbesondere durch Anschlagen der Eingriffsgeometrie, welche entweder am Bremssattel oder an dem Betätigungselement vorgesehen ist an dem Transponder, dieser außer Funktion gesetzt werden. Mit Vorteil ist der Transponder an der Innenseite eines Bremssattels derart festgelegt, dass er durch einen Belagträger des Bremssystems bei Erreichen eines vorausgewählten Betätigungsweges zerstört wird. Bei der Anordnung des Transponders auf der Innenseite des Bremssattels ist dieser thermisch isoliert von den Reibpartnern des Scheibenbremssystems. Hierdurch ist eine höhere Lebensdauer des Transponders zu erwarten. Bei einem Belagwechsel nach Erreichen eines maximalen Verschleißzustandes der Belagelemente wird ein neuer Transponder an die Innenseite des Bremssattels, vorzugsweise an derselben Position wie der zuvor verwendete und zerstörte Transponder, eingeklebt.

In einer nicht erfindungsgemäßen Ausführungsform ist der Transponder in einer Aussparung in einem Bremsbelagelement gehalten. Das Bremsbelagelement ist dabei mit Vorteil ein Belagelement einer Scheibenbremse oder eine Bremsbacke. Insbesondere bevorzugt ragt der Transponder dabei mit einem für seine Funktionfähigkeit nötigen Abschnitt, wie einer Schleife des Schwingkreises oder der Antenne, in den Bereich des Bremsbelages hinein. Durch Verschleiß und somit Verringern der Bremsbelagdicke wird ab einem bestimmten Grenzwert auch der Transponder durch die Trommelbremse oder die Bremsscheibe abgerieben und somit außer Funktion gesetzt. Besonders vorteilhaft ist hierbei, dass nach der Zerstörung des Transponders dieser gemeinsam mit dem Bremsbelagelement durch ein neues Bremsbelagelement mit einem neuen, funktionsfähigen Transponder ersetzt werden kann. Ein Ablösen des Transponders vom Bremsbelagelement oder ähnliche zusätzliche Arbeitsschritte sind hierbei nicht erforderlich.

In einer nicht erfindungsgemäßen Ausführungsform ist der Transponder auf einen Bremsbelagträger aufgesetzt und dort gehalten. Alternativ zum Einbringen des Transponders in eine dafür vorgesehene Aussparung am Bremsbelagelement kann dieser auch seitlich oder neben dem Bremsbelag auf den Bremsbelagträger, wie beispielsweise den Bremsbackensteg oder die Belagträgerplatte eines Belagelements für eine Scheibenbremse aufgesetzt und dort gehalten sein. Hierfür bietet sich insbesondere eine stoffschlüssige Verbindung an, welche jedoch alternativ oder zusätzlich durch eine beispielsweise kraftschlüssige Verbindung hergestellt oder verstärkt sein kann. Vorteilhaft beim bloßen Aufsetzen des Transponders auf den jeweiligen Bremsträger ist, dass keinerlei Änderungen oder konstruktive Eingriffe in existierende Bremselemente erforderlich sind und der Belagträger eines Standard-Bremssystems mit einem Transponder gemäß der vorliegenden Erfindung ausgestattet werden kann.

In einer nicht erfindungsgemäßen Ausführungsform ist der Transponder auf eine Belaghaltefeder aufgeklebt, welche form- und/oder kraftschlüssig an einem Bremssystem und einem Bremsbelagträger festlegbar ist. Bei der Festlegung des Transponders an einer Belaghaltefeder kann dieser gemeinsam mit der Feder bereitgestellt werden, insbesondere dann, wenn ein neuer Bremsbelag an der Belagträgerplatte über die Belaghaltefeder festgeklemmt und gegebenenfalls zusätzlich formschlüssig festgelegt wird. Dabei können insbesondere Belaghaltefedern mit daran angeordnetem Transponder unabhängig von der Größe und Geometrie des Bremsbelages des Bremssystems bereitgestellt werden. Hierdurch können die Vielseitigkeit der Einsetzbarkeit sowie die Herstellungskosten für eine Verschleißüberwachung deutlich verbessert werden. Zudem kann, sofern der Bremsbelag bereits vor Erreichen des Grenzverschleißes ausgewechselt wird und der Transponder entsprechend noch nicht außer Funktion gesetzt wurde, die Belaghaltefeder gemeinsam mit dem Transponder erneut verwendet werden.

In einer nicht erfindungsgemäßen Ausführungsform ist der Transponder an einem Betätigungselement des Bremssystems festlegbar, wobei der Transponder bei Überschreiten eines voreingestellten Betätigungsweges durch mechanische Einwirkung des feststehenden Teils des Bremssystems außer Funktion gesetzt wird. Alternativ oder zusätzlich zur Festlegung eines Transponders auf einer der zuvor beschriebenen Befestigungspositionen kann ein Transponder an einem Betätigungselement des Bremssystems festgelegt, vorzugsweise angeklebt, werden. Ähnlich zu der Ausnutzung des Betätigungsweges der Belagelemente sowie der Belagträgerelemente kann auch bei dem Betätigungselement, beispielsweise der Kolben einer Spreizkeileinheit für eine Trommelbremse oder der Betätigungszylinder eines Scheibenbremssystems, der vom Betätigungselement gemeinsam mit dem Transponder zurückgelegte Weg als Indikator für den Verschleiß des Bremssystems genutzt werden. Korrespondierend zur Befestigungsposition des Transponders ist dabei die Eingriffsgeometrie derart ausgebildet, dass sie den Transponder entweder zerstört, oder diesen gegen von außen eingebrachte elektromagnetische Wellen abschirmt. Mit Vorteil kann der Transponder bei der Festlegung an dem Betätigungselement des Bremssystems in Bereiche des Bremssystems verlegt werden, in welchen geringere Temperaturen als an den Belagelementen, wie den Bremsbacken oder Belagträgern des Bremssystems verlegt werden. Dies sichert insbesondere bei Dauerbetrieb der Bremse einen verlässlichen Einsatz des Transponders.

In einer nicht erfindungsgemäßen Ausführungsform ist der Transponder an einem Nietelement zur Befestigung des Bremsbelages am Bremsbelagträger festgelegt, wobei das Nietelement und der Transponder in einer Aussparung am Bremsbelag angeordnet sind. Insbesondere für den bevorzugten Fall, dass die Belagpads auf den Bremsbelagträger mittels Nieten aufgebracht und festgelegt sind, können die Köpfe der Niete dafür verwendet werden, auf diesen Transponder anzuordnen und festzulegen. Insbesondere sind dabei das Nietelement bzw. der Kopf des Nietelements und der Transponder gemeinsam in einer Aussparung am Bremsbelag versenkt. Sobald der Bremsbelag einen bestimmten Verschleißzustand erreicht hat und um eine bestimmte Dicke abgerieben wurde, wird auch der Transponder durch die Bremsscheibe oder die Bremstrommel des Bremssystems abgeschliffen und schließlich außer Funktion gesetzt. Für den Einsatz direkt am Bremsbelag weist der Transponder vorzugsweise eine besonders hohe thermische Belastbarkeit auf.

In einer nicht erfindungsgemäßen Ausführungsform ist der Transponder an einem Schaft eines S-Nockens einer Trommelbremse festgelegt, derart, dass bei Erreichen eines bestimmten Drehwinkels des S-Nockens der Transponders durch eine am Gehäuse des Bremssystems ausgebildete Abdeckgeometrie nach außen hin abgeschirmt wird. Insbesondere um bei einer Trommelbremse die Erreichbarkeit des Transponders für elektromagnetische Wellen zu verbessern, kann dieser am Schaft eines S-Nockens zur Betätigung der Trommelbremse angeordnet sein. Dabei wird der Transponder gemeinsam mit dem S-Nocken gedreht, wobei eine bestimmte Drehwinkellage des S-Nockens bei Anliegen des Bremssystems für einen bestimmten Verschleißzustand des Bremssystems steht. Mit Vorteil ist am Gehäuse des Bremssystems eine Abdeckgeometrie vorgesehen, welche den Transponder im maximal verdrehten Zustand des S-Nockens ab einem bestimmten Verschleiß des Bremssystems derart abdeckt, dass keine elektromagnetischen Wellen zum Transponder hin und von diesem weg gesendet werden können.

In einer weiteren bevorzugten Ausführungsform ist der Transponder über zumindest ein Verbindungelement zwischen zwei Bremsbacken einer Trommelbremse aufgehängt, wobei im Bereich des Transponders eine Sollbruchstelle vorgesehen ist und wobei die Bremsbacken bei Erreichen einer vorausgewählten Beabstandung voneinander den Transponder zerreißen. Diese sehr einfache Ausführungsform erlaubt es, den Transponder in ein existierendes Bremssystem einzufügen, wobei der Transponder ähnlich der Einbauposition einer Rückstellfeder zwischen zwei Bremsbacken einer Trommelbremse aufgehängt ist. Das Verbindungselement, welches dafür vorgesehen ist, den Transponder zwischen den Bremsbacken anzuordnen und festzulegen, ist dabei vorzugsweise stabiler ausgelegt als der Bereich des Transponders selbst, wobei hierdurch eine Sollbruchstelle am Transponder vorgesehen ist. Bei Erreichen eines bestimmten Verschleißes an den Bremsbacken der Trommelbremse müssen diese weiter voneinander beabstandet werden, um weiterhin in Anlage mit der Bremstrommel zu gelangen. Hierbei kann ein bestimmter Grenzwert der Beabstandung der beiden Bremsbacken vorausgewählt werden, ab welchem der Transponder durch das Verbindungselement und indirekt durch die Auseinanderbewegung der Bremsbacken zerrissen wird.

In einer nicht erfindungsgemäßen Ausführungsform kann der Transponder an einem S-Nocken einer Trommelbremse angeordnet sein, derart, dass bei Erreichen eines bestimmten Verdrehwinkels des S-Nockens der Transponder direkt oder indirekt durch eine am S-Nocken angreifende Bremsbacke zerstört wird. Mit Vorteil kann hierbei die Verdrehposition des S-Nockens, ab welcher der Transponder zerstört wird, genau eingestellt werden.

Erfindungsgemäß ist der Transponder an einem feststehenden Teil des Bremssystems festgelegt, wobei bei einer Relativbewegung eines bewegten Teils des Bremssystems relativ zu dem feststehenden Teil das bewegte Teil den Transponder durch mechanische Einwirkung oder Abschirmen außer Funktion setzt. Alternativ zur Festlegung des Transponders am bewegten Teil des Bremssystems kann dieser auch am feststehenden Teil angeordnet sein. Dies hat den Vorteil, dass der Transponder insbesondere in seiner Position bezogen auf das Fahrwerk des Nutzfahrzeuges stets an der gleichen Position ist. Hierdurch kann das Lesegerät unabhängig vom Betätigungszustand des Bremssystems stets einen bestimmten Zugangswinkel für elektromagnetische Strahlung zum Transponder erreichen. Weiterhin bevorzugt ist der Transponder durch die Festlegung am feststehenden Teil des Bremssystems weniger Beschleunigungskräften und somit einer potentiellen Verringerung der Lebensdauer durch diese periodischen Lastwechsel ausgesetzt.

Erfindungsgemäß ist eine Verschleißüberwachung vorgesehen, welche einen Transponder und ein Lesegerät umfasst, wobei der Transponder am Bremssystem derart angebracht ist, dass er funktionsunfähig wird, sobald ein dem Transponder zugeordnetes Belagelement die Verschleißgrenze erreicht, wobei das Lesegerät den Transponder mit elektromagnetischer Strahlung aktiviert und dessen Zustand ermittelt und für einen Empfänger oder Anwender aufbereitet. Der Transponder ist vorzugsweise ein am Bremssystem, gemäß einer der zuvor beschriebenen Ausführungsformen, vorgesehener RFID-Chip. Das Lesegerät weist vorzugsweise eine Quelle für elektromagnetische Strahlung auf und gleichzeitig die Möglichkeit, das Antwortsignal eines als passiver RFID-Chip ausgelegten Transponders auszulesen und für einen Anwender aufzubereiten und sichtbar zu machen. Die Position des Lesegerätes bestimmt sich dabei nach der Erreichbarkeit des Transponders im Bremssystem. Mit Vorteil ist das Lesegerät mit einer Sendestärke ausgestattet, welche es erlaubt, von außerhalb eines Nutzfahrzeuges, also vorzugsweise in einem Bereich von vier bis acht Metern, sämtliche am Nutzfahrzeug angeordneten Transponder anzusenden und entsprechend die Antwortsignale der Transponder einzeln zu erfassen und für einen Empfänger oder Anwender der Verschleißüberwachung aufzubereiten und anzuzeigen.

Mit Vorteil überwacht das Lesegerät dabei eine Vielzahl von Transpondern und übermittelt deren Zustand an einen Empfänger oder Anwender. Ein erster Zustand des jeweiligen Transponders ist dabei, dass dieser antwortet und somit die Verschleißgrenze des diesem Transponder zugeordneten Belagelements noch nicht erreicht ist. Sofern das Lesegerät von einem am Kraftfahrzeug vorgesehenen Transponder kein Antwortsignal erhält, übermittelt es diese Information an den Anwender, welcher daraufhin einen Austausch des entsprechenden Belagelements vornehmen kann. Bevorzugt weist das Lesegerät dabei einen Speicher auf, in welchem die für ein bestimmtes Fahrzeug geplanten oder eingebauten Transponder und ihre jeweilige Befestigungsposition sowie ihre Kennung gespeichert sind, wobei das Lesegerät diesen Sollzustand des Kraftahrzeuges mit dem ermittelten Ist-Zustand, d. h. der Anzahl und Kennung der Transponder, welche auf ein Erregersignal des Lesegeräts antworten, vergleicht.

Hierdurch kann der Empfänger bestimmen bzw. ist es für einen Anwender auf den ersten Blick möglich zu bestimmen, ob und welche Transponder des Bremssystems nicht mehr antworten und welchen Bremssystemen, d. h. welcher einzelnen Bremsbacke oder Bremstrommel oder Scheibenbremse, diese Transponder zugeordnet sind. Besonders vorteilhaft ist hierbei die Verwendung einer schematischen Grafik, welche für den jeweiligen Transponder dessen Einbauposition am Fahrwerk des Kraftfahrzeuges, insbesondere des Nutzfahrzeuges, auf einfache Weise grafisch aufbereitet.

In einer ersten bevorzugten Ausführungsform ist das Lesegerät dabei am Fahrzeug installiert und in der Lage, sowohl im Stand des Fahrzeuges, als auch während der Fahrt des Fahrzeuges den Verschleißzustand von zumindest einem Bremssystem zu überwachen. Besonders bevorzugt ist das Lesegerät dabei im Unterbodenbereich des Fahrzeuges installiert und in der Lage, in regelmäßigen Abständen eine Abfrage an die jeweiligen Transponder zu senden und mittels der von den Transpondern erhaltenen Antwortsignalen zu bestimmen, ob alle Transponder im Bereich des Fahrwerks des Nutzfahrzeugs oder Kraftfahrzeugs funktionstüchtig sind. Insbesondere bei Nutzfahrzeugen, bei denen nur kurze Standzeiten und insgesamt hoher Zeitdruck bei der Abfertigung der Nutzfahrzeuge besteht, kann auf diese Weise dem Führer des Nutzfahrzeuges mittels eines im Cockpit vorgesehenen Displays der Zustand sämtlicher in den jeweiligen Bremssystemen angeordneter Transponder unmittelbar angezeigt werden. Hierbei könnte auch eine Resteinsetzbarkeit der jeweiligen Bremssysteme nach Ausfall eines Transponders und somit einem Erreichen einer bestimmten Verschleißgrenze durch das Überwachungssystem angezeigt werden.

Alternativ bevorzugt ist das Lesegerät außerhalb des Fahrzeuges installiert und ausgelegt, während der Vorbeifahrt des Fahrzeuges den Zustand eines Transponders oder einer Vielzahl von Transpondern zu ermitteln. Insbesondere für den Fall, dass eine Nutzfahrzeugflotte oder beispielsweise eine Flotte von Mietwagen oder Firmenwägen vorgesehen ist, kann ein Lesegerät im Bereich der Ein- oder Ausfahrt eines zentralen Stellplatzes oder Firmengeländes angeordnet sein, welches für jedes der Fahrzeuge den Zustand der am Fahrzeug angeordneten Transponder bestimmt und einer zentralen Überwachungseinheit übermittelt. Auf diese Weise kann das Flottenmanagement dank dieser Information unmittelbar Wartungsarbeiten für die jeweiligen Fahrzeuge planen und durchführen lassen. Darüber hinaus ist es lediglich erforderlich, ein einziges Lesegerät für eine gesamte Flotte und eine Vielzahl von Transpondern an jedem Fahrzeug zu beschaffen. Es lässt sich auf diese Weise ein verlässlicher und optimierter Betriebsablauf erreichen, da Wartungsintervalle nicht festgelegt werden müssen, sondern am tatsächlichen Verschleiß des Bremssystems orientiert sein können.

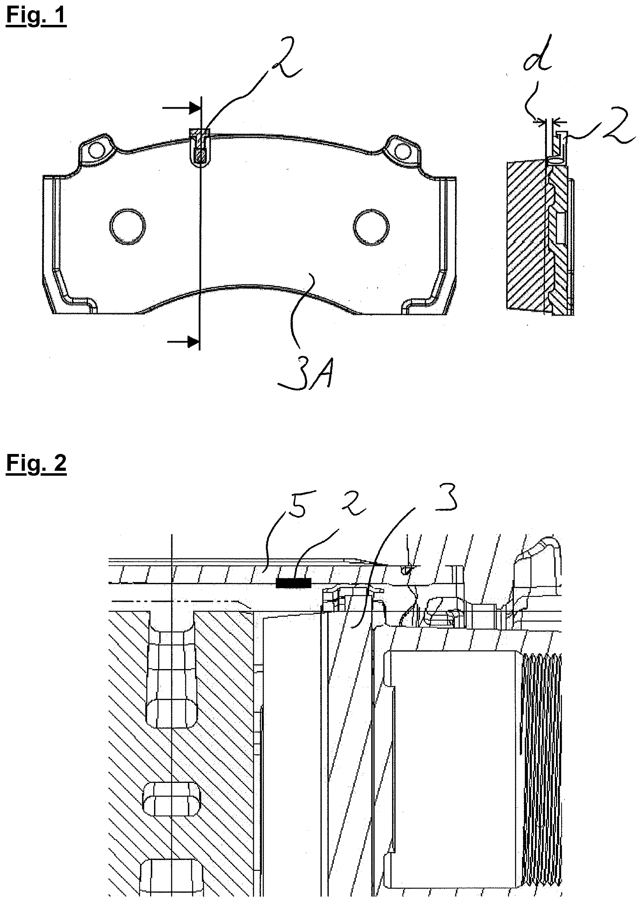

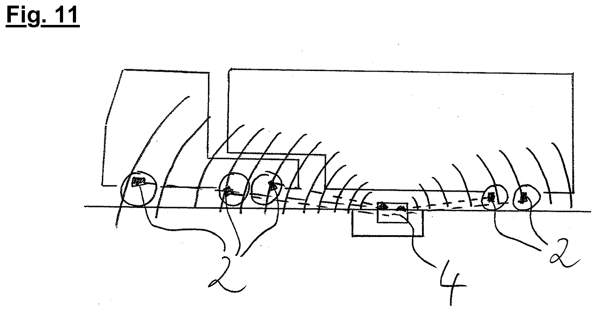

Weitere Vorteile und Merkmale der vorliegenden Erfindung ergeben sich aus der nachfolgenden Beschreibung in Bezug auf die beigefügten Figuren. Es versteht sich dabei, dass einzelne in nur einer der gezeigten Ausführungsformen offenbarte Merkmale jeweils auch in weiteren, in anderen Figuren gezeigten Ausführungsformen, Anwendung finden können, sofern sich dies nicht aufgrund technischer Gegebenheiten verbietet oder explizit ausgeschlossen wurde. Es zeigen dabei die Figuren 1-10 jeweils Ausführungsformen von Bremssystemen mit daran angeordneten Transpondern. Fig. 11 zeigt schematisch eine bevorzugte Ausführungsform eines Systems zur Verschleißüberwachung.

Fig. 1 zeigt einen Transponder 2, welcher an einem Belagelement einer Scheibenbremse festgelegt ist. Dabei ist das Belagelement, welches sich aus dem Bremsbelag selbst sowie dem Belagträger zusammensetzt, insbesondere als erstes bewegtes Teil 3A gekennzeichnet. Verdeutlicht ist dabei, dass bei Erreichen einer bestimmten Restdicke d des Bremsbelages der Transponder 2 von der Bremsscheibe abgerieben wird, wobei er außer Funktion gesetzt wird.

Fig. 2 zeigt eine Ausführungsform, bei der der Transponder 2 am feststehenden Teil 5 eines Bremssystems festgelegt ist und bei Erreichen einer bestimmten Relativbewegung des bewegten Teils 3 des Bremssystems zerstört und somit außer Funktion gesetzt wird. Der feststehende Teil 5 ist vorzugsweise ein mit dem Bremsträger verbundenes Gehäuse einer Betätigungsanlage für eine Scheibenbremse. Der bewegte Teil 3 ist vorzugsweise ein Bremsbelagelement, welches nach in der Figur links gegen die links in der Figur dargestellte Bremsscheibe gepresst wird. Sobald der Bremsbelag eine bestimmte Abnutzung erfahren hat und somit der Belagträger weiter nach links verschoben werden muss, um den Belag in Kontakt mit der Bremsscheibe zu bringen, wird der Transponder 2 durch die an der Oberseite des bewegten Teils 3 vorgesehene Eingriffsgeometrie kontaktiert und schließlich zerstört.

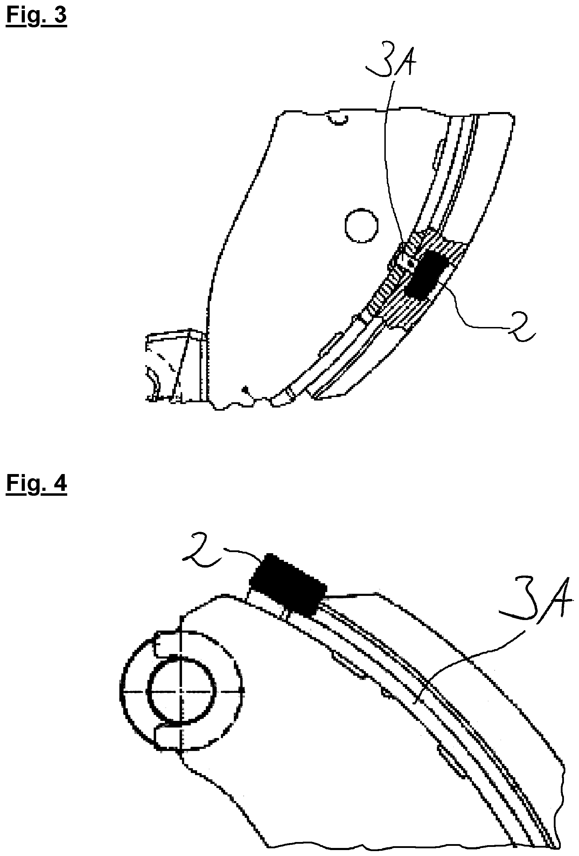

Fig. 3 zeigt eine bevorzugte Ausführungsform, bei welcher der Transponder 2 auf einem als Niet ausgelegten bewegten Teil 3A festgelegt ist. Nicht gezeigt ist dabei, dass ein zweites bewegtes Teil 3B, vorzugsweise die Bremstrommel, den Transponder bei Erreichen eines bestimmten Verschleißes abreibt und somit außer Funktion setzt.

Die in Fig. 4 gezeigte Ausführungsform ähnelt der in Fig. 3 gezeigten Ausführungsform bis auf das Merkmal, dass der Transponder nicht auf dem Niet der Bremsbacke angeordnet ist, sondern im vorderen Bereich des Bremsbelags. Wie auch bei der in Fig. 3 gezeigten Ausführungsform wird der Transponder 2 dabei durch ein zweites bewegtes Teil 3B, vorzugsweise die Bremstrommel, abgerieben und zerstört, wenn das als erstes bewegtes Teil 3A fungierende Belagelement einen bestimmten Verschleiß erfahren hat.

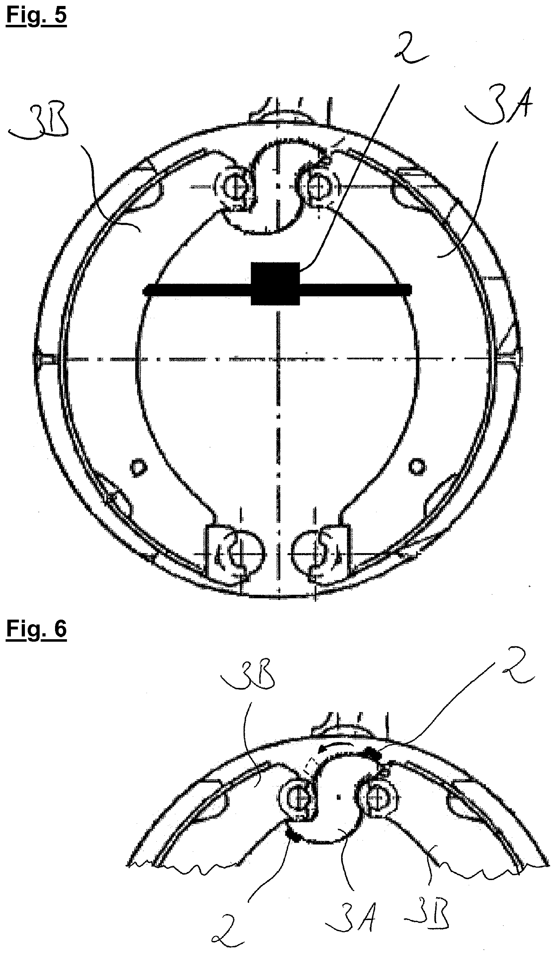

Fig. 5 zeigt die bevorzugte Ausführungsform des erfindungsgemäßen Bremssystems, bei dem der Transponder 2 zwischen zwei Bremsbacken einer Trommelbremse aufgehängt ist. Bevorzugt ist eine Sollbruchstelle im Bereich des Transponders 2 vorgesehen, welche dafür sorgt, dass bei einer bestimmten Beabstandung der beiden Bremsbacken voneinander der Transponder zerrissen und somit außer Funktion gesetzt wird. Die Bremsbacken sind als erstes bewegtes Teil 3A, zweites bewegtes Teil 3B definiert.

Fig. 6 zeigt eine bevorzugte Ausführungsform des Bremssystems, bei welcher der Transponder 2 auf dem ersten bewegten Teil 3A festgelegt ist, welches als S-Nocken der Trommelbremse ausgebildet ist. Bei Erreichen eines bestimmten Verschleißes wird der Transponder 2 dabei durch das zweite bewegte Teil 3B kontaktiert und zerstört. Mit Vorteil können hierbei zwei Transponder 2 an dem S-Nocken vorgesehen sein, wobei jeweils ein Transponder 2 einer der Bremsbacken zugeordnet ist.

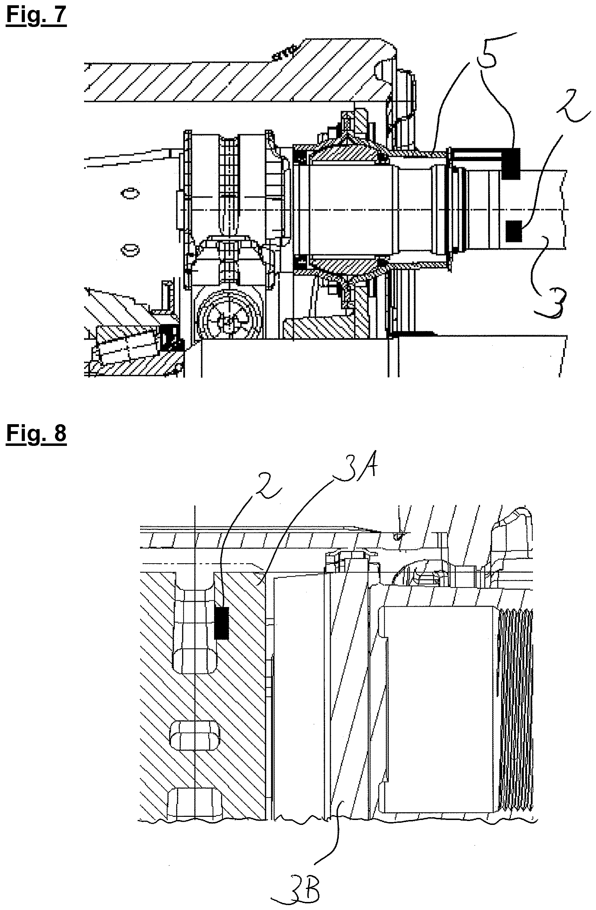

Fig. 7 zeigt eine weitere bevorzugte Ausführungsform, bei welcher der Transponder 2 auf der Welle eines S-Nockens angeordnet ist und mit dieser gemeinsam um die Strichpunktlinie gedreht wird. Dabei ist am Gehäuse des Bremssystems, welches als feststehender Teil 5 anzusehen ist, eine Eingriffsgeometrie angeordnet, welche den Transponder bei Erreichen einer bestimmten Verdrehposition des als bewegter Teil 3 ausgebildeten Schafts des S-Nockens zerstört oder gegen elektromagnetische Strahlung abschirmt.

Fig. 8 offenbart eine weitere bevorzugte Ausführungsform, bei welcher der Transponder 2 in einer Bremsscheibe, welche als erstes bewegtes Teil 3A anzusehen ist, angeordnet ist. Da der Transponder 2 eine bestimmte thermische Belastbarkeit aufweist, kann dieser sowohl zur Indizierung des Verschleißes der Bremsscheibe, als auch zur Indizierung von Temperaturspitzen verwendet werden. So kann, wenn die Temperatur einen bestimmten Grenzwert überschritten hat und somit gegebenenfalls Materialschäden im Material der Bremsscheibe befürchtet werden müssen, der Transponder durch die thermische Überbelastung außer Funktion gesetzt sein, was dem Anwender des Bremssystems durch das Fehlen eines Antwortsignals dieses Transponders übermittelt wird. Als zweites bewegtes Teil 3B ist bei dieser Ausführungsform das Belagelement mit dem Bremsbelag und dem Belagträger anzusehen.

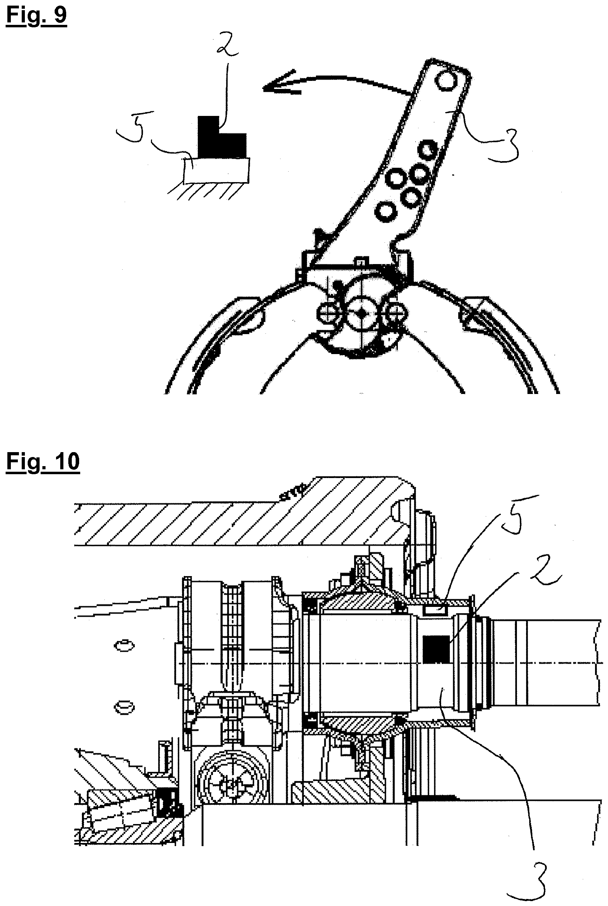

Fig. 9 zeigt eine weitere bevorzugte Ausführungsform der vorliegenden Erfindung, wobei der Transponder 2 an einem feststehenden Teil 5 im Fahrwerkssystem des Kraftfahrzeuges festgelegt ist. Als bewegtes Teil 3 im Sinne der vorliegenden Erfindung wird der Betätigungshebel für den S-Nocken verwendet, welcher bei Erreichen einer bestimmten Auslenkungsposition (Pfeil) den Transponder 2 kontaktiert und bei Überschreiten dieser Auslenkungsposition den Transponder 2 zerstört. Bei dieser Ausführungsform kann der Transponder 2 sowohl zum Anzeigen des Bremsbackenverschleißes, als auch zur Anzeige der Funktion der Nachstellvorrichtung am S-Nocken verwendet werden. Wenn die Nachstellvorrichtung nicht funktioniert, so werden mit zunehmendem Verschleiß der Bremsbacken die Auslenkbewegungen des Betätigungshebels immer größer, so dass schließlich eine maximale Auslenkung erreicht ist, bei welcher der Transponder 2 zerstört wird. Sollte der Transponder 2 in der in Fig. 9 gezeigten Ausführungsform also außer Funktion gesetzt sein, so ist dies von einem Anwender als Hinweis auf ein Ausschöpfen des Nachstellbereiches der Nachstellvorrichtung wegen zu hohem Verschleiß der Beläge oder als Hinweis auf einen Fehler in der Nachstellvorrichtung zu interpretieren.

Fig. 10 zeigt eine Ausführungsform eines erfindungsgemäßen Bremssystems, welche der in Fig. 7 gezeigten Ausführungsform stark ähnelt. Wiederum ist der Transponder 2 auf der Betätigungswelle für einen S-Nocken, welcher als bewegtes Teil 3 fungiert, angeordnet und festgelegt. Bei Erreichen einer bestimmten Verdrehwinkelposition des Schaftes des S-Nocken wird der Transponder 2 durch eine am feststehenden Teil 5 vorgesehene Betätigungsgeometrie kontaktiert und zerstört. Bei dieser Ausführungsform bietet es sich an, dass im Transponder wiederum eine Sollbruchstelle vorgesehen ist, um zu verhindern, dass der Transponder 2 einfach nur von der Welle abgeschabt wird und weiterhin funktionsfähig im Bereich des Gehäuses der Bremsbetätigung verbleibt.

Fig. 11 offenbart ein Verschleiß-Überwachungssystem, umfassend einen Transponder 2 und ein Lesegerät 4, wobei das Lesegerät 4 dafür ausgelegt ist, eine Vielzahl von Transpondern 2, welche vorzugsweise nach einer der zuvor beschriebenen Ausführungsformen ausgebildet und im jeweiligen Bremssystem angeordnet sind, zu überwachen. Bevorzugt ist, wie in Fig. 11 gezeigt, das Lesegerät 4 im Bodenbereich beispielsweise der Einfahrt eines Fuhrparkes von Kraftfahrzeugen, insbesondere bevorzugt Nutzfahrzeugen, angeordnet.

**Bezugszeichen:**

| | | |
|---|---|---|
| 2 | - | Transponder |
| 3 | - | bewegtes Teil |
| 3A | - | erstes bewegtes Teil |
| 3B | - | zweites bewegtes Teil |
| 4 | - | Lesegerät |
| 5 | - | feststehendes Teil |
| d | - | Restdicke |

## Patentansprüche

1. Bremssystem, insbesondere zum Einsatz in Kraftfahrzeugen,
umfassend einen Transponder (2),
wobei der Transponder (2) dafür ausgelegt und im Bremssystem positioniert und/oder festgelegt ist, dass er bei Erreichen eines vorbestimmbaren Verschleißzustandes des Bremssystems von einer Eingriffsgeometrie des Bremssystems außer Funktion gesetzt wird,
**dadurch gekennzeichnet, dass** der Transponder (2) an einem feststehenden Teil (5) des Bremssystems festgelegt ist,
wobei bei einer Relativbewegung eines bewegten Teils (3) relativ zu dem feststehenden Teil (5), das bewegte Teil (3) den Transponder (2) außer Funktion setzt.

2. Bremssystem nach Anspruch 1,
wobei der Transponder (2) als passiver RFID-Chip ausgelegt ist.

3. Bremssystem nach einem der vorhergehenden Ansprüche,
wobei der Transponder (2) stoffschlüssig am Bremssystem festgelegt ist.

4. Bremssystem nach einem der vorhergehenden Ansprüche,
wobei der feststehende Teil (5) des Bremssystems ein Bremsträger oder ein Gehäuse ist.

5. Verschleißüberwachung umfassend einen Transponder (2) und ein Lesegerät (4),
wobei der Transponder (2) am Bremssystem derart angebracht ist, dass er funktionsunfähig wird, sobald ein dem Transponder (2) zugeordnetes Belagelement die Verschleißgrenze erreicht,
wobei das Lesegerät (4) den Transponder (2) mit elektromagnetischer Strahlung aktiviert und dessen Zustand ermittelt und für einen Empfänger oder Anwender aufbereitet,
**dadurch gekennzeichnet, dass** der Transponder (2) an einem feststehenden Teil (5) des Bremssystems festgelegt ist,
wobei bei einer Relativbewegung eines bewegten Teils (3) relativ dem feststehenden Teil (5), das bewegte Teil (3) den Transponder (2) außer Funktion setzt..

6. Verschleißüberwachungssystem nach Anspruch 5,
wobei das Lesegerät (4) außerhalb des Fahrzeuges installiert ist, und ausgelegt ist, während der Vorbeifahrt des Fahrzeuges, den Zustand eines Transponders (2) oder einer Vielzahl von Transpondern (2) zu ermitteln.

## Claims

1. A brake system, in particular for use in motor vehicles,
comprising a transponder (2),
wherein the transponder (2) is designed and positioned and/or secured in the brake system so that it is deactivated by an engagement geometry of the brake system when a predeterminable wear state of the brake system is reached,
**characterized in that** the transponder (2) is secured to a stationary part (5) of the brake system,
wherein in the event of a relative movement of a moving part (3) relative to the stationary part (5), the moving part (3) deactivates the transponder (2).

2. The brake system as claimed in claim 1,
wherein the transponder (2) is designed as a passive RFID chip.

3. The brake system as claimed in either of the preceding claims,
wherein the transponder (2) is cohesively secured to the brake system.

4. The brake system as claimed in either of the preceding claims,
wherein the stationary part (5) of the brake system is a brake carrier or a housing.

5. Wear monitoring comprising a transponder (2) and a reader (4),
wherein the transponder (2) is fitted to the brake system in such a way that it becomes inoperative as soon as a lining element assigned to the transponder (2) reaches the wear limit,
wherein the reader (4) activates the transponder (2) with electromagnetic radiation and determines the state of said transponder and conditions it for a receiver or user,
**characterized in that** the transponder (2) is secured to a stationary part (5) of the brake system,
wherein in the event of a relative movement of a moving part (3) relative to the stationary part (5), the moving part (3) deactivates the transponder (2).

6. The wear monitoring system as claimed in claim 5,
wherein the reader (4) is installed outside the vehicle and is designed, as the vehicle travels past, to determine the state of one transponder (2) or of a multiplicity of transponders (2).

## Revendications

1. Système de frein, en particulier destiné à l'utilisation dans des véhicules automobiles, comportant un transpondeur (2),
le transpondeur (2) étant conçu et positionné et/ou immobilisé dans le système de frein de telle sorte qu'il est rendu inopérant par une géométrie d'engagement du système de frein lorsqu'un état d'usure prédéterminable du système de frein est atteint,
**caractérisé en ce que**
le transpondeur (2) est immobilisé sur une partie fixe (5) du système de frein,
lors d'un mouvement relatif d'une partie mobile (3) par rapport à la partie fixe (5), la partie mobile (3) met le transpondeur (2) hors service.

2. Système de frein selon la revendication 1,
dans lequel
le transpondeur (2) est conçu comme une puce RFID passive.

3. Système de frein selon l'une des revendications précédentes,
dans lequel
le transpondeur (2) est immobilisé par coopération de matière sur le système de frein.

4. Système de frein selon l'une des revendications précédentes,
dans lequel
la partie fixe (5) du système de frein est un support de frein ou un boîtier.

5. Système de surveillance de l'usure, comprenant un transpondeur (2) et un lecteur (4),
dans lequel
le transpondeur (2) est monté sur le système de frein de telle manière qu'il devient inopérant dès qu'un élément de garniture associé au transpondeur (2) atteint la limite d'usure,
le lecteur (4) active le transpondeur (2) par rayonnement électromagnétique, détermine son état et le prépare pour un récepteur ou un utilisateur,
**caractérisé en ce que**
le transpondeur (2) est immobilisé sur une partie fixe (5) du système de frein,
en cas de mouvement relatif d'une partie mobile (3) par rapport à la partie fixe (5), la partie mobile (3) met le transpondeur (2) hors service.

6. Système de surveillance de l'usure selon la revendication 5,
dans lequel
le lecteur (4) est installé à l'extérieur du véhicule et est conçu pour détecter l'état d'un transpondeur (2) ou d'une multitude de transpondeurs (2) lors du passage du véhicule.
